# EUROPÄISCHE PATENTSCHRIFT

(11) **EP 4 323 727 B1**
(45) Veröffentlichungstag und Bekanntmachung des Hinweises auf die Patenterteilung: **25.02.2026**
(21) Anmeldenummer: 22718893.5
(22) Anmeldetag: 28.03.2022
(51) Int. Cl.: G01D 5/14

(54) **ELEKTROMAGNETISCHES HUBMESSSYSTEM, MAGNETHALTER SOWIE VERWENDUNG EINES ELEKTROMAGNETISCHEN HUBMESSSYSTEMS**
ELECTROMAGNETIC STROKE MEASURING SYSTEM, MAGNET HOLDER AS WELL AS USE OF AN ELECTROMAGNETIC STROKE MEASURING SYSTEM
SYSTÈME ÉLECTROMAGNÉTIQUE DE MESURE DE COURSE D'UN PISTON, SUPPORT D'AIMANT AINSI QU'UTILISATION D'UN SYSTÈME ÉLECTROMAGNÉTIQUE DE MESURE DE COURSE D'UN PISTON

(30) Priorität: 14.04.2021 DE 102021109267
(43) Veröffentlichungstag der Anmeldung: 21.02.2024
(73) Patentinhaber: KNORR-BREMSE Systeme für Nutzfahrzeuge GmbH, 80809 München (DE)
(72) Erfinder: SCHNEIDER, Jörg, 71701 Schwieberdingen (DE); RÖTHER, Friedbert, 74389 Cleebronn (DE); NEUBERT, Philipp, 71576 Burgstetten (DE); WIMMER, David, 70619 Stuttgart (DE)
(86) Internationale Anmeldenummer: PCT/EP2022/058118
(87) Internationale Veröffentlichungsnummer: WO 2022/218679

(56) Entgegenhaltungen:
- WO-A1-2020/006099
- DE-A1- 102012 222 547
- DE-A1- 19 637 296
- US-A1- 2019 039 590

## Beschreibung

Die Erfindung betrifft ein elektromagnetisches Hubmesssystem, einen Magnethalter mit einem Magneten für ein solches Hubmesssystem sowie eine Verwendung eines solchen Hubmesssystems.

Zur Messung eines Hubs können elektromagnetische Hubmesssysteme eingesetzt werden, die beispielsweise einen Hall-Sensor und einen Magneten aufweisen. Der Hall-Sensor misst das Magnetfeld, welches vom Magneten ausgeht. Ändert sich das Magnetfeld um den Hall-Sensor, so wird dies durch den Hall-Sensor detektiert und entsprechend elektronisch aufbereitet an ein Auswertesystem weitergeleitet. Die Güte und Genauigkeit des Sensorsystems bzw. der Messergebnisse hängen dabei unter anderem von der Stärke sowie der Stabilität des Magnetfeldes an der entsprechenden Messposition ab. Die Stärke des Magnetfeldes wird durch den Abstand des Magneten vom Sensor in lateraler bzw. radialer als auch transversaler Richtung bestimmt.

Ein solches elektromagnetisches Hubmesssystem wird beispielsweise in einem Fußbremsmodul verbaut. Das elektromagnetische Hubmesssystem ermittelt hierbei über die Stellung des Magneten relativ zum Hall-Sensor die Position des Stößels im Fußbremsmodul. Der Hall-Sensor ist in einer festen Position im Fußbremsmodul verbaut und somit in seiner Position bezüglich eines Gehäuses, in dem der Stößel bewegt wird, in allen drei Raumrichtungen konstant. Durch die Hubbewegung des Stößels wird der Magnet in der Hubbewegungsrichtung, also einer axialen Richtung in Bezug auf eine Längsachse des Stößels, am Sensor vorbeigeführt und die jeweilige Relativposition detektiert. Relativbewegungen des Magneten in anderen Raumrichtungen sind dabei unerwünscht, da sie das Signal und somit die vermeintlich detektierte Hubposition verfälschen.

In diesem Zusammenhang offenbart die EP 3 620 754 A1 einen Magnethalter, der einen den Stößel umfänglich umschließenden Halteabschnitt aufweist, wobei der Halteabschnitt über einen Gehäusedurchbruch geführt wird. Der durch den Haltabschnitt gehaltene den Magneten aufweisende Magnetabschnitt ist dabei außerhalb des Gehäusedurchbruchs angeordnet und steht in Richtung des Sensors vor. Da der Magnethalter somit lediglich in einem vom Magneten abgewandten Abschnitt geführt wird, führen beispielsweise kleine Relativbewegungen in Umfangsrichtung des Stößels im Bereich der Führung zu im Bezug hierauf größeren Relativbewegungen des Magnetabschnitts außerhalb des Durchbruchs. Zudem können radiale Relativbewegungen auftreten. Darüber hinaus ist aber auch der Sensor durch den Gehäusedurchbruch nicht mehr durch das Gehäuse von dem Führungsraum des Stößels getrennt, so dass durch den Gehäusedurchbruch Feuchtigkeit und Verunreinigungen zum Sensor gelangen können. Hierüber kann ebenfalls das Messergebnis verfälscht oder der Sensor beschädigt werden.

Die DE 196 37 296 A1 betrifft eine Kolben/Zylinder-Anordnung mit einem Kolben, der innerhalb eines Zylinders axial verschiebbar und um seine Längsachse drehbar ist, und einem ersten Teil einer zur Sensierung der axialen Verschiebung des Kolbens gegenüber dem Zylinder, das am Zylinder angebracht ist. Das erste Teil der Sensoreinrichtung steht mit einem zweiten Teil der Sensoreinrichtung, das mit dem Kolben axial verschiebbar ist, in Wirkverbindung. Zwischen dem Kolben und dem Zylinder ist ein wenigstens einen Teilabschnitt des Kolbens umgebendes und gegenüber dem Kolben in dessen Umfangsrichtung bewegbares Führungselement angeordnet, das zur axialen Führung des Kolbens dient.

Die WO 2020/006099 A1 betrifft eine Bremskammer, die ein Kammergehäuse mit einem Ende, eine Schubstange, die für eine Hin- und Herbewegung in dem Kammergehäuse in einer ersten Richtung und einer zweiten Richtung über eine Hubstrecke konfiguriert ist, eine Rückstellfeder, die in dem Kammergehäuse angeordnet und konfiguriert ist, um die Schubstange in die zweite Richtung zu drängen, und eine Sensoranordnung mit einem Sensor und einem Magneten, der relativ zum Sensor mit Bewegung der Schubstange beweglich ist, umfasst. Der Sensor ist konfiguriert, um eine Magnetfeldstärke des Magneten zu erfassen und Sensordaten auszugeben, die für die erfasste Magnetfeldstärke repräsentativ sind. Die Sensoranordnung ist konfiguriert, um eine Position der Schubstange basierend auf den Sensordaten über die gesamte Hubstrecke zu bestimmen.

Die US 2019/039590 A1 betrifft eine Bremsvorrichtung, ein Bremssystem und einen Hauptzylinder, die ein Bewegungsausmaß eines Kolbens erfassen können. Die Bremsvorrichtung umfasst ein Hauptzylindergehäuse, das darin einen Zylinder umfasst, einen Kolben, der innerhalb des Zylinders vorgesehen und in eine Richtung einer axialen Linie des Zylinders beweglich ist, einen Magneten, der innerhalb des Zylinders teilweise in einer Umfangsrichtung des Kolbens vorgesehen und eingerichtet ist, um gemäß einer Bewegung des Kolbens verschoben zu werden, wobei die Umfangsrichtung eine Richtung um die axiale Linie herum ist, einen Erfassungsbereich, der auf dem Hauptzylindergehäuse vorgesehen und eingerichtet ist, um ein Bewegungsausmaß des Kolbens zu erfassen, und einen Rotations-Beschränkungsmechanismus, der innerhalb des Zylinders vorgesehen und eingerichtet ist, um eine Bewegung des Magneten in der Umfangsrichtung zu beschränken.

Die DE 10 2012 222547 A1 betrifft einen Hauptzylinder umfassend ein Gehäuse mit einem Sensorelement zur Überwachung von Position und/oder Bewegung von einem Kolben, der in einer Kolbenbohrung entlang einer Achse bewegbar angeordnet ist, und wobei in der Kolbenbohrung ein bewegbarer Magnet angeordnet ist, der mit dem Sensorelement kooperiert. Der Magnet ist in einem begrenzten kreisumfänglichen Teilbereich der Kolbenbohrung wirksam sowie entlang der Achse und um diese unverdrehbar geführt, und zur Positionierung des Magneten in Relation zum Sensorelement sind Verdrehsicherungsmittel vorgesehen, welche über eine Umfangskontur des Kolbens hinausragen und sich an einer Innenwandung des Gehäuses abstützen.

In Anbetracht der vorstehenden Ausführungen liegt der Erfindung die Aufgabe zugrunde, ein elektromagnetisches Hubmesssystem, einen Magnethalter sowie eine Verwendung des elektromagnetischen Hubmesssystems bereitzustellen, über die eine Hubmessung zuverlässig realisiert werden kann.

Die Aufgabe wird durch ein elektromagnetisches Hubmesssystem nach Anspruch 1, einen Magnethalter mit einem Magneten für ein solches Hubmesssystem nach Anspruch 10 sowie eine Verwendung eines solchen Hubmesssystems nach Anspruch 13 gelöst. Vorteilhafte Weiterbildungen der Erfindung sind in den abhängigen Ansprüchen enthalten.

Erfindungsgemäß weist ein elektromagnetisches Hubmesssystem einen Stößel mit einer in Hubrichtung weisenden Längsachse auf, wobei der Stößel in Richtung der Längsachse in einem Gehäuse angeordnet und in diesem in Richtung der Längsachse bewegbar ist. Zudem weist das elektromagnetische Hubmesssystem einen Magnethalter mit einem in einem Magnetabschnitt des Magnethalters angeordneten Magneten, wobei der Magnethalter an einem in Bezug auf die Längsachse radialen Umfang des Stößels so angeordnet ist, dass er zusammen mit dem Stößel in axialer Richtung bewegbar ist, sowie ein Sensorelement auf, das in Bezug auf die Längsachse auf einer dem Stößel abgewandten Seite des Gehäuses angeordnet ist. Das Gehäuse bildet eine Führung aus, in der der Magnetabschnitt in Richtung der Längsachse zumindest abschnittsweise geführt wird.

Da der Magnethalter in Bezug auf die Längsachse in axialer Richtung zusammen mit dem Stößel bewegt wird, korrespondiert eine Position des Magneten zu einer Position des Stößels. Die zumindest abschnittsweise Führung des Magnetabschnitts in der Führung des Gehäuses ermöglicht somit im Wesentlichen die direkte Wiedergabe der Stößelbewegung bzw. der dazu korrespondierenden Stößelposition in Hubrichtung. Durch die Führung des Magnetabschnitts können dabei mögliche Relativbewegungen des übrigen Magnethalters in von der axialen Richtung abweichenden Raumrichtungen kompensiert oder zumindest deren Effekt vermindert werden. Auch wenn dies nicht immer explizit angegeben sein sollte, beziehen sich auf Richtungsangaben gerichtete Begriffe, wie radial oder axial, im Folgenden auf die Längsachse des Stößels.

Somit kann der Magnetabschnitt bzw. der darin aufgenommene Magnet direkt geführt werden, so dass sich die Messgenauigkeit erhöht bzw. eine Messunsicherheit verringert. Der Magnetabschnitt kann auch direkt über den Magneten ausgebildet werden.

Als Sensorelement sind Hall-Sensoren oder magnetoresistive Sensoren einsetzbar, die zu einer Änderung des Magnetfelds korrespondierende Sensorsignale erzeugen, beispielsweise durch Änderung des Widerstands im Sensorelement. Beispiele für magnetoresistiven Sensoren sind unter anderem GMR-Sensoren, AMR-Sensoren oder auch TMR-Sensoren. Beim auf dem Hall-Prinzip beruhenedn Hall-Sensoren wird die sogenannte Hall-Spannung gemessen, die sich durch eine Änderung des Magnetfeldes verändert. Dieses Prinzip beruht auf dem Hall-Effekt der in einem stromdurchflossenen elektrischen Leiter auftritt. Hingegen basiert ein magnetoresistiver Sensor darauf, dass der elektrische Widerstand in einer ferromagnetischen Dünnschichtlegierung durch ein äußeres Magnetfeld geändert wird. In diesem Zusammenhang wird oft der planare Hall-Effekt benannt, dieser zeigt aber nur einen ähnlichen Effekt wie der oben beschriebene gewöhnliche Hall-Effekt.

Zudem weist der Magnethalter einen Halteabschnitt auf, der sich in Bezug auf die Längsachse in radialer Richtung erstreckt und in einer im Stößel dafür vorgesehenen Aussparung aufgenommen wird.

Der Halteabschnitt ist demnach ein Abschnitt, der sich in radialer Richtung vom Magnetabschnitt in Richtung des Stößels erstreckt. Zur Anordnung des Magnethalters am Umfang des Stößels wird das freie Ende des Halteabschnitts, also das vom Magnetabschnitt in radialer Richtung weg weisende Ende, in einer im Stößel dafür vorgesehenen Aussparung aufgenommen, um zusammen mit dem Stößel in axialer Richtung bewegbar zu sein.

Der Halteabschnitt ist in der Aussparung in Bezug auf die Längsachse in radialer Richtung spielbehaftet gelagert.

Über das Spiel in radialer Richtung können Relativbewegungen zwischen dem in der Aussparung des Stößels aufgenommenen Bereich des Halteabschnitts und dem Stößel in radialer Richtung ermöglicht werden. Dadurch kann der Einfluss einer radialen Bewegung des Stößels auf die radiale Position des Magnethalters verhindert oder zumindest verringert werden.

Gemäß einer Weiterbildung umgibt die Führung den geführten Magnetabschnitt in einer Umfangsrichtung an zumindest drei Punkten, insbesondere vollflächig.

Der geführte Magnetabschnitt wird demnach in Bezug auf die Längsachse in seiner axialen Bewegung umfänglich von der Führung umgeben. Dadurch, dass der Magnetabschnitt in einer Umfangsrichtung an zumindest drei Punkten von der Führung umgeben ist, wird der Magnetabschnitt ausreichend geführt. Eine Bewegung des Magnetabschnitts in radiale Richtungen in Bezug auf die Längsachse wird somit verhindert. Die zumindest drei Punkte liegen in Umfangsrichtung beispielsweise in einem Abstand von 120°. Mit anderen Worten umgibt die Führung den geführten Magnetabschnitt in einer Umfangsrichtung vollständig. Der Begriff "vollständig" ist darauf gerichtet, dass die Führung den geführten Magnetabschnitt soweit vollständig umgibt, dass eine vollumfängliche Führung gegeben ist. Die Führung kann dabei auch Unterbrechungen aufweisen, die aber keinen Einfluss auf die Führungseigenschaften haben. Mit anderen Worten wird durch die Unterbrechungen kein Bewegungsspiel in radialer Richtung des geführten Magnetabschnitts in der Führung zugelassen oder erhöht. Der Begriff "vollflächig" bezieht sich in diesem Zusammenhang auf eine vollumfänglich geschlossene Führungsfläche. Im Hinblick auf das dem Gehäuse gegenüberliegend angeordnete Sensorelement kann eine vollflächige Ausbildung der Führung das Sensorelement schützen. Das Sensorelement ist somit durch die vollflächige Führung durch das Gehäuse weiterhin von den beweglichen Komponenten getrennt. Ein Eindringen von Feuchtigkeit und/oder Verunreinigungen in den Raum, in dem das Sensorelement angeordnet ist, wird somit verhindert.

In einer Ausgestaltung ist die Führung derart konfiguriert, dass der Magnetabschnitt in Richtung der Längsachse zwischen einer ersten Position, in der zumindest ein der Führung zugewandtes Ende des Magnetabschnitts in die Führung eingreift, und einer zweiten Position, in der der Magnetabschnitt weiter in die Führung eingeführt wird, bewegbar ist.

Der Magnetabschnitt wird somit zumindest abschnittsweise über den gesamten Weg in Richtung der Längsachse zwischen der ersten Position und der zweiten Position über die Führung geführt. Bevorzugt bilden die erste und zweite Position den maximalen Hub des Magnethalters korrespondierend zum maximalen Hub des Stößels ab. Entsprechend kann der Magnetabschnitt über seine gesamte Bewegung in Richtung der Längsachse über die Führung bewegt werden.

Sofern der Magnetabschnitt in der ersten Position lediglich in die Führung eingreift und erst mit der Bewegung in die zweite Position weiter in die Führung hineinragt, kann der Magnethalter leichter am Stößel montiert und in dem elektromagnetischen Hubmesssystem verbaut werden. Insbesondere kann die Führung darüber auch eine einfache Bewegungsbegrenzung für den Magnethalter in der zweiten Position ausbilden, wie dies folgend noch beschrieben wird. Die erste Position kann somit einer Montage- oder Ausgangsposition entsprechen.

Insbesondere ist die Aussparung als in Bezug auf die Längsachse radial umlaufende Nut, insbesondere vollumfänglich umlaufende Nut, ausgebildet.

Der Begriff der radial umlaufenden Nut bezieht sich darauf, dass die Nut zumindest abschnittsweise über den Umfang des Stößels verläuft. Es können auch mehrere radial umlaufende Nutabschnitte gebildet werden, die in Richtung der Längsachse und/oder radial umlaufend, also auf gleicher Höhe in Bezug auf die Längsachse, angeordnet sind. Hierdurch ergibt sich die Möglichkeit, einen modularen Aufbau vorzusehen, um beispielsweise einen Stößel für unterschiedliche Hubmesssysteme mit unterschiedlichen Positionsanforderungen an den Magnethalter realisieren zu können und/oder mehrere Magnethalter einzusetzen. Bei einer vollumfänglichen Nut weist diese radial umlaufend keine Unterbrechungen auf, so dass eine beliebige Aufnahmeposition für den Halteabschnitt und somit des Magnethalters entlang des Umfangs des Stößels gewählt werden kann. Auch hier können mehrere vollumfänglich umlaufende Nuten in axialer Richtung voneinander beabstandet angeordnet sein.

Alternativ kann die Aussparung auch eine andere geometrische Ausgestaltung aufweisen, die zu dem freien Ende des Halteabschnitts korrespondiert, um dieses aufnehmen zu können.

Die Aussparung ist bevorzugt in Umfangsrichtung breiter auszulegen als die Breite eines hierin aufzunehmenden Bereichs des Halteabschnitts in dieser Richtung. Wird beispielsweise die Aussparung des Stößels über eine radial vollumfänglich umlaufende Nut ausgebildet, so kann eine Relativbewegung zwischen dem Halteabschnitt bzw. Magnethalter und dem Stößel über den gesamten Stößelumfang erfolgen. Selbst wenn sich der Stößel im Gehäuse um seine Längsachse dreht, kann der Magnethalter weiter im Stößel und in der Führung gehalten werden, ohne dass die Stößeldrehung auf den Magnethalter übertragen wird. Eine entsprechende Konfiguration erfordert zudem auch keine anderweitigen seitlichen Führungen zur Verhinderung einer radialen Verdrehung des Magnethalters am Gehäuse oder einem Deckel des Gehäuses, so dass eine verschleißarme Ausgestaltung realisiert werden kann.

Gemäß einer Weiterbildung ist der Halteabschnitt in der Aussparung in Bezug auf die Längsachse axial spielfrei gelagert.

Demnach entspricht die axiale Bewegung des Stößels der axialen Bewegung des Magnethalters. Durch die spielfreie Lagerung in axialer Richtung kann zudem verhindert werden, dass der Magnethalter um eine Achse senkrecht zur Längsachse verkippt.

Die spielfreie Lagerung in axialer Richtung ist insbesondere derart konfiguriert, dass sie eine Bewegung des Haltabschnitts in der Aussparung in der Umfangsrichtung und/oder der radialen Richtung, soweit diese vorgegeben ist, nicht unterbindet oder soweit behindert, dass übermäßige Verschleißerscheinungen oder Materialbelastungen auftreten.

Gemäß einer Weiterbildung ist der Magnethalter in Bezug auf die Längsachse in axialer Richtung über ein federelastisches Element vorgespannt, das vorzugsweise in der Führung zwischen dem der Führung zugewandten Ende des Magnetabschnitts und einem diesen Ende gegenüberliegenden Ende der Führung angeordnet ist.

Über die Vorspannung kann der Halteabschnitt gegen eine der sich gegenüberliegenden Seitenwände der Aussparung gedrückt werden, wodurch die in Bezug auf die Längsachse axial spielfreie Lagerung des Halteabschnitts in der Aussparung umsetzbar ist. Hierzu ist das federelastische Element beispielsweise als Druckfeder ausgebildet, die in der Führung angeordnet ist. Die Druckfeder stützt sich dabei mit ihrem einen Ende an dem der Führung zugewandten Ende des Magnetabschnitts und mit ihrem anderen Ende an dem Magnetabschnitt gegenüberliegenden Führungsboden ab. Die Führung kann auch einen radial nach innen weisenden Vorsprung bzw. weisende Vorsprünge aufweisen, die anstelle des Führungsbodens als Abstützung dienen. Die Druckfeder drückt dann den Halteabschnitt gegen die der Führung abgewandte Seitenwand der sich gegenüberliegenden Seitenwände der Aussparung. Alternativ kann das federelastische Element auch als Zugfeder ausgebildet sein. In einem solchen Fall zieht die Zugfeder den Halteabschnitt gegen die der Führung zugewandte Seitenwand der sich gegenüberliegenden Seitenwände der Aussparung. Hierzu ist die Zugfeder an ihren Abstützpunkte entsprechend verankert. Ungeachtet der Ausgestaltung des federelastischen Elements zur Aufbringung einer Druck- oder Zugkraft ist das federelastische Element insbesondere derart konfiguriert, dass das federelastische Element die Vorspannung über die gesamte vorbestimmte Bewegung des Magnethalters bzw. Stößels in Richtung der Längsachse aufbringt.

In einer Ausgestaltung weist der Stößel eine Mittelachse auf, die sich entlang der Längsachse erstreckt, wobei eine dem Gehäuse zugewandte Sensorfläche des Sensorelements parallel zu einer sich parallel zur Mittelachse erstreckenden Sensorebene angeordnet ist und die Führung der Sensorfläche gegenüberliegend angeordnet ist. Das Sensorelement ist dabei außerhalb einer durch ein Lot von der Mittelachse auf die Sensorebene und die Mittelachse aufgespannten Ebene angeordnet.

Die Sensorebene ist demnach eine Ebene, zu der die dem Gehäuse zugewandte Sensorfläche des Sensorelements parallel ausgerichtet ist. Das Sensorelement liegt dabei in der bzw. parallel zur Sensorebene in radialer Richtung nicht im Lot zur Mittelachse des Stößels, sondern hierzu lateral versetzt. Gemäß der vorstehenden Konfiguration ist somit auch die dem Sensorelement bzw. der Sensorfläche gegenüberliegende Führung diesbezüglich außerhalb des Lots. Das Gehäuse mit der Führung kann somit näher an die Sensorebene herangeführt werden, da der Bauraum für die Führung quasi vom Lot aus um einen Winkel verschoben wird. Somit kann das Hubmesssystem kompakter ausgebildet werden.

Gemäß einer Weiterbildung wird der Stößel in einer Stößelführung in Richtung der Längsachse geführt.

Die Stößelführung kann dabei einen Deckel des Gehäuses ausbilden, so dass für die Führung des Stößels keine zusätzlichen Komponenten verbaut werden müssen. Die Stößelführung kann beispielsweise aus einem Kunststoff gebildet werden. Bevorzugt ist die Stößelführung in Richtung der Längsachse des Stößels gegenüberliegend der Führungsöffnung der Führung für den Magnethalter angeordnet. Der Magnethalter bewegt sich demnach in axialer Richtung in einem Bereich zwischen der Stößelführung und einem der Führungsöffnung abgewandten Ende der Führung des Magnethalters. Die Stößelführung kann auf einer der Führungsöffnung in axialer Richtung zugewandten Seite einen Anschlag für den Stößel ausbilden, so dass eine Bewegung des Stößels in Richtung der Stößelführung begrenzt wird. Der Stößel weist dazu beispielsweise einen zur Führung des Stößels in der Stößelführung vorgesehenen Stößelführungsabschnitt auf, der einen kleineren Durchmesser aufweist als Bereich des Stößels, der mit dem durch die Stößelführung gebildeten Anschlag in Anlage kommen kann. Die Anschlagsposition des Stößels an der Stößelführung kann beispielsweise mit der bereits angeführten ersten Position korrespondieren.

Insbesondere ist der Stößel in Bezug auf die Längsachse in axialer Richtung über ein federelastisches Element vorgespannt, vorzugsweise in Richtung der Stößelführung.

Durch das federelastische Element kann der Stößel in einer vorbestimmten Ausgangsposition gehalten werden. Beispielsweise spannt das federelastische Element den Stößel in Richtung der vorstehend beschriebenen Stößelführung vor, so dass der Stößel ohne weitere Krafteinwirkung zum Beispiel in Anlage mit dem durch die Stößelführung gebildeten Anschlag gehalten werden kann. Hierzu kann das federelastische Element als Druckfeder ausgebildet sein, die im Stößel angeordnet ist und sich gegen eine in axialer Richtung der Stößelführung gegenüberliegenden Stützfläche abstützen kann. Die Feder kann alternativ auch außen um den Stößel herum geführt werden, so dass der Stößel innerhalb der Federwindungen angeordnet ist.

In einem weiteren Aspekt betrifft die Erfindung einen Magnethalter mit einem Magneten für ein erfindungsgemäßes elektromagnetisches Hubmesssystem, wobei der Halteabschnitt des Magnethalters als Kragarm ausgebildet ist und sich der Magnetabschnitt in einem Winkel, insbesondere im Wesentlichen senkrecht, zum Kragarm erstreckt.

Der Magnethalter bildet somit einen L-förmigen Körper aus, wobei ein Schenkel den Halteabschnitt als Kragarm aufweist und der andere Schenkel den Magnetabschnitt ausbildet. Durch eine im Wesentlichen senkrechte Anordnung der Schenkel zueinander kann der Magnetabschnitt bei entsprechend senkrechter Aufnahme des Haltabschnitts in der Aussparung des Stößels in Bezug auf die Längsachse parallel zum Sensorelement geführt werden. Die parallele Bewegung erlaubt eine weitestgehend eng tolerierte Ausgestaltung der Führung des Magnetabschnitts. Die im Wesentlichen senkrechte Anordnung der Schenkel zueinander ist dabei auf mögliche Fertigungstoleranzen gerichtet, die zu geringfügigen Abweichungen führen können.

In einer Ausgestaltung weist der Halteabschnitt an einem freien Ende zwei sich in einer Ebene des Halteabschnitts, von der sich der Magnetabschnitt erstreckt, jeweils seitlich zu beiden Seiten des Haltabschnitts nach außen erstreckende, insbesondere in der Erstreckungsrichtung gebogene und vom Magnetabschnitt weg weisende, Haltearme auf.

Durch die Haltearme kann der Bereich des Haltabschnitts zur Aufnahme in die Aussparung des Stößels, wie die vorstehend beschriebene Nut, vergrößert werden, ohne den Halteabschnitt insgesamt vergrößern zu müssen. Die Haltearme sind entsprechend der gegebenen Haltebedingungen, wie Gewicht, Hebelwirkung und dergleichen, ausreichend zu dimensionieren. Für eine austarierte Halterung des in der Aussparung gehaltenen Bereichs des Halteabschnitts sind die Haltearme bevorzugt jeweils symmetrisch zueinander ausgebildet. Durch die eine gebogene Formgebung der Haltearme, wobei die gebogenen Enden der Haltearme vom Magnetabschnitt weg weisen, können die Haltearme beispielsweise die Formgebung einer Nut als Aussparung zur Aufnahme der Haltearme nachbilden. Die Haltearme können somit eine größtmögliche Auflagefläche in axialer Richtung aufweisen, ohne Störkonturen zu bilden. Darüber hinaus können die Haltearme auch zur Fixierung des Magnethalters in der Aussparung des Stößels während der Montage genutzt werden.

Gemäß einer Weiterbildung sind Flächen der Haltearme, die im Wesentlichen parallel zur Ebene des Halteabschnitts, von der sich der Magnetabschnitt erstreckt, verlaufen, zumindest abschnittsweise ballig ausgebildet.

Durch die ballige Ausbildung der Flächen können die Haltearme eine Drehung des Stößels um eine senkrecht zur Längsachse verlaufende Achse aufnehmen. Der Begriff "im Wesentlichen parallel" bezieht sich in diesem Zusammenhang darauf, dass eine ballige Fläche strenggenommen nicht parallel zu einer Ebene verläuft. Entsprechend wird über den Begriff die Flächenausrichtung adressiert. Hinsichtlich der vorstehenden Fixierung während der Montage bietet die ballige Ausgestaltung der Haltearme zudem die Möglichkeit, Ausgleichsbewegungen während des Montagevorgangs ausführen zu können.

Die Erfindung betrifft in einem weiteren Aspekt auch die Verwendung eines erfindungsgemäßen elektromagnetischen Hubmesssystems für ein Fußbremsmodul.

Die Vorteile der entsprechenden Verwendung ergeben sich analog zu den bisherigen Ausführungen. Insbesondere kann die Verwendung des elektromagnetischen Hubmesssystems für Fußbremsmodule durch die zuverlässigere Hubmessung die Sicherheit erhöhen und ist somit gerade für sicherheitsrelevante Anwendungen von Vorteil.

Im Folgenden wird die Erfindung unter Bezugnahme auf die beigefügten Figuren näher erläutert. Die Figuren zeigen im Einzelnen:
**Figur** 1 eine schematische Querschnittsansicht eines elektromagnetischen Hubmesssystems in einer Schnitteben entlang einer Längsachse gemäß einer exemplarischen Ausführungsform;
**Figur** 2 eine schematische Querschnittsansicht des elektromagnetischen Hubmesssystems gemäß Figur 1 entlang der Linie A-A;
**Figur 3** eine schematische Querschnittsansicht eines vergrößerten Ausschnitts des Hubmesssystems im Bereich des Magnethalters gemäß Figur 1.

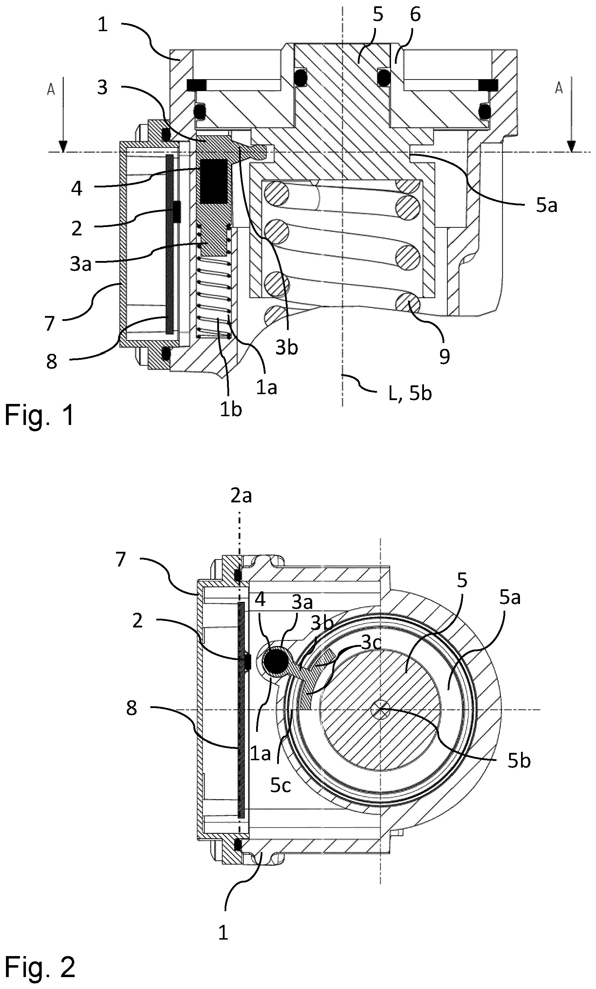

**Figur 1** zeigt eine schematische Querschnittsansicht eines elektromagnetischen Hubmesssystems in einer Schnitteben entlang einer Längsachse (L) gemäß einer exemplarischen Ausführungsform. Das Hubmesssystem weist einen Stößel 5 auf, wobei die Längsachse L in Richtung der Hubbewegung des Stößels 5 weist. Der Stößel 5 ist in einem Gehäuse 1 angeordnet. Das Gehäuse 1 nimmt den Stößel 5 auf und umgibt ihn um seinen radialen Umfang in Bezug auf die Längsachse L. Ein axiales Ende des Stößels 5 wird in axialer Richtung in einer Stößelführung 6 geführt. Der Stößel 5 ist somit in axialer Richtung geführt bewegbar. Die Stößelführung 6 bildet hier eine Art Deckel für das Gehäuse 1 aus. Der Hub des Stößels 5 in Richtung der Stößelführung 6 wird dabei durch einen durch die Stößelführung 6 gebildeten Anschlag begrenzt. Der Stößel 5 weist dazu einen Absatz zwischen einem in der Stößelführung 6 zu bewegenden Abschnitt und dem weiter in das Gehäuse 1 hineinragenden Abschnitt auf. Der Absatz kann durch einen radial nach außen weisenden Vorsprung oder eine generelle Querschnittsvergrößerung des Stößels 5 ausgebildet werden. In der dargestellten exemplarischen Ausführungsform ist der Stößel 5 ein zylindrischer Körper mit zwei Abschnitten, die jeweils einen unterschiedlichen Durchmesser aufweisen. Der Stößelabschnitt mit kleinerem Durchmesser dient dazu, den Stößel 5 in der Stößelführung 6 zu führen. Durch den sich daran anschließenden Stößelabschnitt mit größerem Durchmesser wird der Absatz gebildet, der dann mit dem Anschlag der Stößelführung 6 zusammenwirken kann. Die Anlage des Stößels 5 am Anschlag der Stößelführung 6 entspricht einer ersten Position des Stößels 5 und damit eines im Folgenden noch beschriebenen Magnethalters 3.

Der Stößel 5 wird durch ein federelastisches Element 9, hier eine Druckfeder, in Richtung der Stößelführung 6 vorgespannt. Das federelastische Element ist hierzu in einem im Stößel 5 gebildeten Innenraum, der auf einer in Richtung der Längsachse L der Stößelführung 6 abgewandten Seite offen ist, angeordnet. Dabei stützt sich das federelastische Element 9 in Richtung der Längsachse an der der Stößelführung zugewandten Innenseite des Stößels sowie an einer der Innenseite gegenüberliegenden, hier nicht gezeigten Stützfläche ab. Alternativ kann das federelastische Element auch um den Stößel 5 herum angeordnet sein und sich an einem in Bezug auf die Längsachse L radial nach außen weisenden Vorsprung an dem Stößel 5 abstützen. Alternativ oder ergänzend können auch mehrere federelastische Elemente vorgesehen sein.

Um den Hub des Stößels 5 messen zu können, ist auf einer in radialer Richtung dem Stößel 5 abgewandten Seite des Gehäuses 1 ein Sensorelement 2 angeordnet. Das Sensorelement 2 ist auf einer Leiterplatte 8 angeordnet, die über eine Sensorelementabdeckung 7 am Gehäuse 1 befestigt wird. In dem gezeigten Beispiel befindet sich das Sensorelement 2 dadurch in einem durch das Gehäuse 1 und die Sensorelementabdeckung 7 gebildeten Raum und ist somit vor äußeren Einflüssen geschützt.

Das Sensorelement 2 detektiert eine Stärke eines Magnetfelds eines Magneten 4. Die Stärke des durch das Sensorelement 2 detektierten Magnetfelds ändert sich dabei in Abhängigkeit der Relativposition des Magneten 4 in Bezug auf das Sensorelement 2. Zur Hubmessung ist der Magnet 4 lediglich in axialer Richtung zu bewegen, um eine Verfälschung des Messsignals durch eine Veränderung des Abstands zum Sensorelement 2 in anderen Raumrichtungen zu vermeiden. Die Bewegung des Magneten 4 in axialer Richtung korrespondiert dabei zu einer Bewegung des Stößels 5 in dieser Richtung. Hierzu ist der Magnet 4 in einem Magnetabschnitt 3a eines Magnethalters 3 angeordnet.

Der Magnet kann gemäß einer alternativen Ausführungsform aber auch direkt den Magnetabschnitt oder zumindest einen freiliegenden Teil davon ausbilden.

Der Magnethalter 3 wird wiederum über einen Bereich eines Halteabschnitts 3b in einer Nut 5a des Stößels 5 aufgenommen. Die Nut 5a ist hier als vollumfänglich radial umlaufende Nut ausgebildet. Durch die zumindest abschnittsweise Anordnung des Halteabschnitts 3b in der Nut 5a wird der Magnethalter 3 bei einer axialen Bewegung des Stößels 5 mitbewegt. Der in der Nut 5a aufgenommene Bereich des Halteabschnitts 3b ist in der Nut 5a in axialer Richtung spielfrei gelagert.

Der Halteabschnitt 3b des Magnethalters 3 bildet einen Kragarm, der sich ausgehend von der Nut 5a in Bezug auf die Längsachse L radial nach außen, also vom Stößel aus gesehen radial in Richtung des Gehäuses 1, erstreckt. Der Magnetabschnitt 3a erstreckt sich von einem in radialer Richtung dem Stößel 5 abgewandten Ende des Halteabschnitts 3b in axialer Richtung. Die Erstreckung des Magnetabschnitts 3a ist dabei ausgehend vom Halteabschnitt 3b in eine der Stößelführung 6 abgewandte Richtung gerichtet, hier in der Bildebene nach unten. Der Magnethalter 3 ist somit als L-förmiger Körper ausgebildet, wobei die Schenkel hier einen Winkel von 90° bilden.

Hinsichtlich der vorstehend angestrebten weitestgehend ausschließlichen Bewegung des Magnetabschnitts 3 und somit des Magneten 4 in axialer Richtung wird der Magnetabschnitt 3a in einer Führung 1a in axialer Richtung geführt bewegt. Die Führung 1a wird durch das Gehäuse 1 gebildet und formt einen Führungskanal aus. Ein Teil der Führung 1a wird durch eine Außenwand des Gehäuses 1 gebildet, wobei der Führungskanal durch einen innenliegenden Wandungsabschnitt in Umfangsrichtung geschlossen wird. Der in der Führung 1a geführte Magnetabschnitt 3a wird demnach in dem geführten Bereich in der Führung 1a in radialer Umfangsrichtung vollständig und vollflächig umgeben. Die Führung 1a ist dabei derart konfiguriert, dass die radialen Seitenwände der Führung 1a den darin geführten Bereich des Magnetabschnitts 3a im Wesentlichen spielfrei umgeben. Eine im Wesentlichen spielfreie Konfiguration dient der Verhinderung einer Bewegung des Magnetabschnitts 3a in der Führung 1a in einer von der axialen Richtung abweichenden Raumrichtung. Gleichzeitig wird aber weiterhin eine axiale Bewegung ermöglicht. Der Begriff "im Wesentlichen" bezieht sich in diesem Zusammenhang darauf, dass hinsichtlich der gegebenen und/oder erforderlichen Messgenauigkeit kleinere Bewegungen in einer von der axialen Richtung abweichenden Raumrichtung tolerierbar sein können.

Die Führung 1a des Magnetabschnitts 3a weist eine in axialer Richtung der Stößelführung 6 zugewandte Führungsöffnung zur Aufnahme des Magnetabschnitts 3a auf. Der Magnetabschnitt 3a greift in der ersten Position, in der der Stößel 5 an dem durch die Stößelführung 6 gebildeten Anschlag anliegt, mit einem dem Halteabschnitt 3b in axialer Richtung abgewandten freien Ende in die Führungsöffnung und somit in die Führung 1a ein. Wird nun der Stößel entgegen der Federkraft des federelastischen Elements 9 in axialer Richtung in das Gehäuse 1 hineinbewegt, wird der Magnethalter 3 in gleicher Richtung mitbewegt. Hierdurch wird der Magnetabschnitt 3a weiter in die Führung 1a eingeführt. Durch den innenliegenden Wandungsabschnitt der Führung 1a wird im Bereich der Führungsöffnung ein Rand ausgebildet. Der Magnethalter 3 ist zwischen der ersten Position und einer zweiten Position, in der der Magnetabschnitt weiter in die Führung 1a eingeführt wird, in axialer Richtung bewegbar. Durch die in axialer Richtung parallel zum Sensorelement 2 ausgerichtete Führung 1a wird der Magnetabschnitt 3a somit positionssicher an dem Sensorelement 2 vorbeigeführt.

Zudem ist in der Führung 1a zwischen einem der Führung 1a zugewandten Ende des Magnetabschnitts 3a und einem diesen Ende gegenüberliegenden Ende der Führung 1a ein federelastisches Element 1b angeordnet. Das federelastische Element ist hier als Druckfeder ausgebildet, dessen Federkraft in Richtung der Längsachse L wirkt. Die Druckfeder spannt den Magnethalter 3 in axialer Richtung in Richtung der Stößelführung 6 vor. Entsprechend wird der Halteabschnitt 3b in der Nut 5a gegen eine der Stößelführung 6 zugewandte Seitenwand, die sich in radialer Richtung in Bezug auf die Längsachse erstreckt, gedrückt. Der Halteabschnitt 3b kann somit in axialer Richtung spielfrei in der Nut 5a gehalten werden.

Unter Bezugnahme auf **Figur 2** wird im Folgenden die Anordnung des freien Endes des Halteabschnitts 3b in der Nut 5a des Stößels näher erläutert. **Figur 2** zeigt eine schematische Querschnittsansicht des elektromagnetischen Hubmesssystems gemäß Figur 1 entlang der Linie A-A.

Gemäß der Querschnittsansicht entlang der Linie A-A weist der der Halteabschnitt 3b an seinem dem Magnetabschnitt 3b in radialer Richtung abgewandten freien Ende zwei Haltearme 3c auf. Die Haltearme 3c erstrecken sich zu beiden Seiten des Halteabschnitts in einer Ebene parallel zur Erstreckungsrichtung des Halteabschnitts 3b vom Magnetabschnitt 3a in Richtung seines freien Endes. Die Erstreckungsrichtung des Halteabschnitts 3b entspricht der radialen Richtung im am Umfang des Stößels 5 angeordneten Zustand. Die Haltearme sind in der Ebene parallel zur Erstreckungsrichtung des Halteabschnitts 3b gebogen ausgeführt, wobei die freien Enden der Haltearme 3c durch die Krümmung vom Magnetabschnitt 3a weg weisen. Mit anderen Worten bilden die Haltearme einen in Bezug auf Magnetabschnitt 3a konvexen Bogen und in Bezug auf den Stößel 5 konkaven Bogen aus. Der Radius des durch die Haltearme 3c gebildeten Bogens korrespondiert dabei im Wesentlichen zu dem Radius der Nut 5a. Die Breite der Haltearme 3c in der Ebene parallel zur Erstreckungsrichtung des Halteabschnitts 3b ist hier etwas kleiner als die Nuttiefe der Nut 5a in der radialen Richtung. Durch die kleinere Breite wird eine radiale Relativbewegung zwischen den Haltearmen 3c und dem Stößel 5 ermöglicht. Gleichzeitig ist die Breite der Haltearme aber auch mindestens so groß, dass sich die Haltearme 3c bei einer maximalen Relativbewegung in radialer Richtung nicht aus der Nut 5a hinausbewegen. Durch das radiale Spiel in Verbindung mit der Aufnahme des Magnetabschnitts 3a in der Führung 1a wird der Einfluss einer radialen Verschiebung des Stößels 5 auf den Magnethalter verhindert oder zumindest verringert.

Gemäß der radial vollumfänglichen umlaufenden Nut 5a kann sich der Magnethalter 3 auch in Umfangsrichtung relativ zum Stößel 5 bewegen. Somit kann auch der Einfluss einer Verdrehung des Stößels 5 um seine Längsachse L unterbunden werden. Somit sind keine weiteren seitlichen Führungen zur Verhinderung einer Verdrehung des Magnethalters 3 am Gehäuse oder an der Stößelführung 6 bzw. dem Deckel erforderlich, so dass Verschleißerscheinungen minimiert werden können.

Die Querschnittsansicht gemäß **Figur 2** zeigt zudem die Anordnung der Führung 1a des Magnetabschnitts 3a in Bezug auf das Sensorelement 2. Die Führung 1a des Magnetabschnitts 3a wird hier über einen radial nach außen weisenden Gehäusevorsprung des Gehäuses 1 gebildet. Das Sensorelement 2 weist eine dem Gehäuse 1 zugewandte Sensorfläche auf, die parallel zu einer sich parallel zu einer Mittelachse 5b des Stößels 5 erstreckenden Sensorebene 2a ausgerichtet ist (die Mittelachse 5b entspricht hier der Längsachse L des Stößels 5). Die dem Gehäuse 1 zugewandte Sensorfläche ist dabei gegenüber der Führung 1a des Magnetabschnitts 3a angeordnet. Die Anordnung des Sensorelements 2 bzw. der Sensorfläche gegenüber der Führung 1a liegt dabei außerhalb einer durch ein Lot 5c von der Mittelachse 5b auf die Sensorebene 2a und die Mittelachse 5b aufgespannten Ebene. Mit anderen Worten weist der die Führung 1a ausbildende Gehäusevorsprung ausgehend von dem durch die Mittelachse auf die Sensorebene in radialer Richtung gefällten Lot einen Winkelversatz auf. Hierdurch kann das Gehäuse 1 insgesamt näher an das Sensorelement 2 herangeführt werden, so dass eine kompaktere Bauweise ermöglicht wird. Dies ist auch dadurch möglich, dass die Führung 1a lediglich einen radialen Gehäusevorsprung und somit nur abschnittsweise eine radiale Querschnittsvergrößerung aufweist.

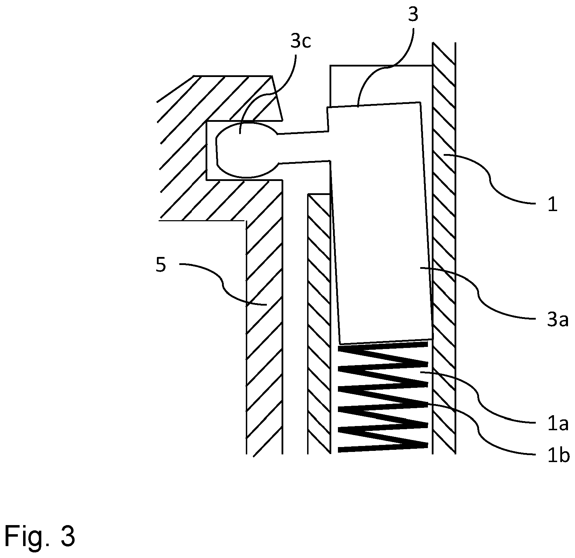

**Figur 3** zeigt eine schematische Querschnittsansicht eines vergrößerten Ausschnitts des Hubmesssystems im Bereich des Magnethalters gemäß **Figur 1**. Die vergrößerte Querschnittsansicht veranschaulicht eine ballige Ausbildung der Flächen der Haltearme 3c, die im Wesentlichen parallel zur Ebene des Halteabschnitts 3b, von der sich der Magnetabschnitt 3a erstreckt, verlaufen. Durch die ballige Ausbildung der Flächen können die Haltearme 3c eine Drehung des Stößels um eine senkrecht zur Längsachse verlaufende Achse aufnehmen. Somit wird auch ein Einfluss einer Verdrehung des Stößels 5 um eine Achse senkrecht zur Längsachse L auf den Magnethalter 3 verhindert oder zumindest verringert. Umgekehrt, wie hier dargestellt, kann aber auch ein leichtes Verkippen des Magnetabschnitts 3a in der Führung 1a kompensiert werden. Die Balligkeit der Flächen ist hier für die in radialer Richtung verlaufenden Flächen, also in einer Raumrichtung, vorgesehen. In einer alternativen Ausführungsform kann eine Balligkeit in zwei Raumrichtungen vorgesehen werden, also beispielsweise auch an der dem Nutboden der Nut 5a.zugewandten axial verlaufenden Fläche des Halteabschnitts 3b. Die Balligkeit führt zu einer konvexen Ausbildung der jeweiligen Flächen.

Das in **Figur 3** dargestellte leichte Verkippen des Magnethalters 3 ist zur Verdeutlichung übertrieben dargestellt. Wie vorstehend angeführt, umgeben die radialen Seitenwände der Führung 1a den darin geführten Bereich des Magnetabschnitts 3a im Wesentlichen spielfrei. Die Spielfreiheit wird hier ebenfalls durch das federelastische Element 1b in der Führung 1a erreicht. Durch das Anliegen der Haltearme 3c in der Nut 5a existiert hier ein Drehpunkt für den ganzen Magnethalter 3. Durch die Federkraft wird der Magnethalter 3 in der Führung 1a an zwei gegenüberliegenden Punkten an die Innenwand der Führung 1a gedrückt, wodurch die "Spielfreiheit" im montierten Zustand und damit auch im Betrieb erreicht wird.

Die Erfindung ist nicht auf die beschriebene Ausführungsform beschränkt. Insbesondere sind zu der Ausführungsform, anderweitig beschriebenen Ausgestaltungen und Weiterbildungen der Erfindung beschriebene Merkmale untereinander kombinierbar, sofern sie sich nicht vernünftigerweise ausschließen. Die Erfindung ist durch die folgenden Ansprüche definiert.

### BEZUGSZEICHENLISTE

- 1: Gehäuse
- 1a: Führung
- 1b: federelastisches Element (Führung)
- 2: Sensorelement
- 2a: Sensorebene
- 3: Magnethalter
- 3a: Magnetabschnitt
- 3b: Halteabschnitt
- 3c: Haltearm
- 4: Magnet
- 5: Stößel
- 5a: Nut
- 5b: Mittelachse
- 5c: Lot
- 6: Stößelführung
- 7: Sensorelementabdeckung
- 8: Leiterplatte
- 9: federelastisches Element (Stößel)

## Patentansprüche

1. Elektromagnetisches Hubmesssystem, aufweisend:
einen Stößel (5) mit einer in Hubrichtung weisenden Längsachse (L), wobei der Stößel (5) in Richtung der Längsachse (L) in einem Gehäuse (1) angeordnet und in diesem in Richtung der Längsachse (L) bewegbar ist,
einen Magnethalter (3) mit einem in einem Magnetabschnitt (3a) des Magnethalters (3) angeordneten Magneten (4), wobei der Magnethalter (3) an einem in Bezug auf die Längsachse (L) radialen Umfang des Stößels (5) so angeordnet ist, dass er zusammen mit dem Stößel (5) in axialer Richtung bewegbar ist, und
ein Sensorelement (2), das in Bezug auf die Längsachse (L) auf einer dem Stößel (5) abgewandten Seite des Gehäuses (1) angeordnet ist,
wobei das Gehäuse (1) eine Führung (1a) ausbildet, in der der Magnetabschnitt (3a) in Richtung der Längsachse (L) zumindest abschnittsweise geführt wird, und
wobei der Magnethalter (3) einen Halteabschnitt (3b) aufweist, der sich in Bezug auf die Längsachse (L) in radialer Richtung erstreckt und in einer im Stößel (5) dafür vorgesehenen Aussparung aufgenommen wird,
**dadurch gekennzeichnet, dass** der Halteabschnitt (3b) in der Aussparung in Bezug auf die Längsachse (L) in radialer Richtung spielbehaftet gelagert ist.

2. Elektromagnetisches Hubmesssystem nach Anspruch 1, wobei die Führung (1a) den geführten Magnetabschnitt (3a) in einer Umfangsrichtung an zumindest drei Punkten, insbesondere vollflächig, umgibt.

3. Elektromagnetisches Hubmesssystem nach Anspruch 1 oder 2, wobei die Führung (1a) derart konfiguriert ist, dass der Magnetabschnitt (3a) in Richtung der Längsachse (L) zwischen einer ersten Position, in der zumindest ein der Führung (1a) zugewandtes Ende des Magnetabschnitts (3a) in die Führung (1a) eingreift, und einer zweiten Position, in der der Magnetabschnitt (3a) weiter in die Führung (1a) eingeführt wird, bewegbar ist.

4. Elektromagnetisches Hubmesssystem nach einem der vorherigen Ansprüche, wobei die Aussparung als in Bezug auf die Längsachse (L) radial umlaufende Nut (5a), insbesondere vollumfänglich umlaufende Nut, ausgebildet ist.

5. Elektromagnetisches Hubmesssystem nach einem der vorherigen Ansprüche, wobei der Halteabschnitt (3b) in der Aussparung in Bezug auf die Längsachse (L) axial spielfrei gelagert ist.

6. Elektromagnetisches Hubmesssystem nach Anspruch 5, wobei der Magnethalter (3) in Bezug auf die Längsachse (L) in axialer Richtung über ein federelastisches Element (1b) vorgespannt ist, das vorzugsweise in der Führung (1a) zwischen dem der Führung (1a) zugewandten Ende des Magnetabschnitts (3a) und einem diesen Ende gegenüberliegenden Ende der Führung (1a) angeordnet ist.

7. Elektromagnetisches Hubmesssystem nach einem der vorherigen Ansprüche, wobei der Stößel (5) eine Mittelachse (5b) aufweist, die sich entlang der Längsachse (L) erstreckt, und wobei eine dem Gehäuse (1) zugewandte Sensorfläche des Sensorelements (2) parallel zu einer sich parallel zur Mittelachse (5a) erstreckenden Sensorebene (2a) angeordnet ist und die Führung (1a) der Sensorfläche gegenüberliegend angeordnet ist, wobei das Sensorelement (2) außerhalb einer durch ein Lot (5c) von der Mittelachse (5b) auf die Sensorebene (2a) und die Mittelachse (5b) aufgespannten Ebene angeordnet ist.

8. Elektromagnetisches Hubmesssystem nach einem der vorherigen Ansprüche, wobei der Stößel (5) in einer Stößelführung (6) in Richtung der Längsachse (L) geführt wird.

9. Elektromagnetisches Hubmesssystem nach einem der vorherigen Ansprüche, wobei der Stößel (5) in Bezug auf die Längsachse (L) in axialer Richtung über ein federelastisches Element (9) vorgespannt ist, vorzugsweise in Richtung der Stößelführung (6).

10. Magnethalter (3) mit einem Magneten (4) für ein elektromagnetisches Hubmesssystem nach einem der Ansprüche 1 bis 9, wobei der Halteabschnitt (3b) des Magnethalters (3) als Kragarm ausgebildet ist und sich der Magnetabschnitt (3a) des Magnethalters (3) in einem Winkel, insbesondere im Wesentlichen senkrecht, zum Kragarm erstreckt.

11. Magnethalter (3) nach Anspruch 10, wobei der Halteabschnitt (3b) an einem freien Ende zwei sich in einer Ebene des Halteabschnitts (3b), von der sich der Magnetabschnitt (3a) erstreckt, jeweils seitlich zu beiden Seiten des Haltabschnitts (3b) nach außen erstreckende, insbesondere in der Erstreckungsrichtung gebogene und vom Magnetabschnitt (3a) weg weisende, Haltearme (3c) aufweist.

12. Magnethalter (3) nach Anspruch 11, wobei Flächen der Haltearme (3c), die im Wesentlichen parallel zur Ebene des Halteabschnitts (3b), von der sich der Magnetabschnitt (3a) erstreckt, verlaufen, zumindest abschnittsweise ballig ausgebildet sind.

13. Verwendung eines elektromagnetischen Hubmesssystems nach einem der Ansprüche 1 bis 9 für ein Fußbremsmodul.

## Claims

1. Electromagnetic stroke measuring system, comprising:
a plunger (5) with a longitudinal axis (L) that is oriented in the stroke direction, wherein the plunger (5) is arranged within a housing (1) and can move therein along the longitudinal axis (L),
a magnet holder (3) with a magnet (4) arranged within a magnetic section (3a) of the magnet holder (3), wherein the magnet holder (3) is arranged on a circumference of the plunger (5) in a radial manner relative to the longitudinal axis (L) such that it is movable together with the plunger (5) in the axial direction, and
a sensor element (2) which is arranged, relative to the longitudinal axis (L), on a side of the housing (1) facing away from the plunger (5),
wherein the housing (1) forms a guide (1a) in which the magnet section (3a) is guided at least in sections in the direction of the longitudinal axis (L), and
wherein the magnet holder (3) has a retaining section (3b) which extends in the radial direction relative to the longitudinal axis (L) and is received in a recess provided for this purpose in the plunger (5),
**characterized in that** the retaining section (3b) is mounted in the recess with radial play relative to the longitudinal axis (L).

2. Electromagnetic stroke measuring system according to claim 1, wherein the guide (1a) surrounds the guided magnet section (3a) in a circumferential direction at at least three points, in particular over the entire surface.

3. Electromagnetic stroke measuring system according to claim 1 or 2, wherein the guide (1a) is configured such that the magnet section (3a) is movable in the direction of the longitudinal axis (L) between a first position, in which at least one end of the magnet section (3a) facing the guide (1a) engages in the guide (1a), and a second position in which the magnet section (3a) is further inserted into the guide (1a).

4. Electromagnetic stroke measuring system according to any one of the preceding claims, wherein the recess is designed as a groove (5a) extending radially around the longitudinal axis (L), in particular a groove extending around the entire circumference.

5. Electromagnetic stroke measuring system according to any one of the preceding claims, wherein the retaining section (3b) is mounted in the recess without axial play relative to the longitudinal axis (L).

6. Electromagnetic stroke measuring system according to claim 5, wherein the magnet holder (3) is preloaded in the axial direction relative to the longitudinal axis (L) by means of a spring-elastic element (1b), which is preferably arranged in the guide (1a) between the end of the magnet section (3a) facing the guide (1a) and an end of the guide (1a) opposite this end.

7. Electromagnetic stroke measuring system according to any one of the preceding claims, wherein the plunger (5) has a central axis (5b) extending along the longitudinal axis (L), and wherein a sensor surface of the sensor element (2) facing the housing (1) is arranged parallel to a sensor plane (2a) extending parallel to the central axis (5a) and the guide (1a) is arranged opposite the sensor surface, wherein the sensor element (2) is arranged outside a plane spanned by a perpendicular (5c) from the central axis (5b) to the sensor plane (2a) and the central axis (5b).

8. Electromagnetic stroke measuring system according to any one of the preceding claims, wherein the plunger (5) is guided in a plunger guide (6) in the direction of the longitudinal axis (L).

9. Electromagnetic stroke measuring system according to any one of the preceding claims, wherein the plunger (5) is preloaded in the axial direction relative to the longitudinal axis (L) via a spring-elastic element (9), preferably in the direction of the plunger guide (6).

10. Magnet holder (3) with a magnet (4) for an electromagnetic stroke measuring system according to any one of claims 1 to 9, wherein the retaining section (3b) of the magnet holder (3) is designed as a cantilever arm and the magnet section (3a) of the magnet holder (3) extends at an angle, in particular substantially perpendicular, to the cantilever arm.

11. Magnet holder (3) according to claim 10, wherein the retaining section (3b) has, at a free end, two retaining arms (3c) which extend in a plane of the retaining section (3b), from which the magnet section (3a) extends, laterally outward to both sides of the retaining section (3b), in particular being curved in the direction of extension and pointing away from the magnet section (3a).

12. Magnet holder (3) according to claim 11, wherein surfaces of the retaining arms (3c) that run essentially parallel to the plane of the retaining section (3b), from which the magnet section (3a) extends, are formed with a convex shape at least in sections.

13. Use of an electromagnetic stroke measuring system according to any one of claims 1 to 9 for a foot brake module.

## Revendications

1. Système de mesure de course électromagnétique présentant :
un coulisseau (5) avec un axe longitudinal (L) dirigé dans le sens de la course, dans lequel le coulisseau (5) est agencé en direction de l'axe longitudinal (L) dans un boîtier (1) et est mobile dans celui-ci en direction de l'axe longitudinal (L),
un porte-aimant (3) avec un aimant (4) agencé dans une section d'aimant (3a) du porte-aimant (3), dans lequel le porte-aimant (3) est agencé sur une périphérie radiale par rapport à l'axe longitudinal (L) du coulisseau (5) de sorte qu'il soit mobile conjointement avec le coulisseau (5) dans le sens axial et
un élément capteur (2) qui est agencé par rapport à l'axe longitudinal (L) sur un côté éloigné du coulisseau (5) du boîtier (1),
dans lequel le boîtier (1) forme un guidage (1a), dans lequel la section d'aimant (3a) est guidée au moins par sections en direction de l'axe longitudinale (L) et
dans lequel le porte-aimant (3) présente une section de retenue (3b) qui s'étend par rapport à l'axe longitudinal (L) dans le sens radial et est reçue dans un évidement prévu à cet effet dans le coulisseau (5),
**caractérisé en ce que** la section de retenue (3b) est logée avec jeu dans l'évidement par rapport à l'axe longitudinal (L) dans le sens radial.

2. Système de mesure de course électromagnétique selon la revendication 1, dans lequel le guidage (1a) entoure en particulier sur toute la surface la section d'aimant (3a) guidée dans un sens périphérique sur au moins trois points.

3. Système de mesure de course électromagnétique selon la revendication 1 ou 2, dans lequel le guidage (1a) est configuré de telle manière que la section d'aimant (3a) soit mobile en direction de l'axe longitudinal (L) entre une première position, dans laquelle au moins une extrémité tournée vers le guidage (1a) de la section d'aimant (3a) s'engage dans le guidage (1a), et une seconde position, dans laquelle la section d'aimant (3a) est introduite plus loin dans le guidage (1a).

4. Système de mesure de course électromagnétique selon l'une quelconque des revendications précédentes, dans lequel l'évidement est formé comme une rainure (5a) tournant radialement par rapport à l'axe longitudinal (L), en particulier une rainure tournant sur toute la périphérie.

5. Système de mesure de course électromagnétique selon l'une quelconque des revendications précédentes, dans lequel la section de retenue (3b) est logée sans jeu axialement dans l'évidement par rapport à l'axe longitudinal (L).

6. Système de mesure de course électromagnétique selon la revendication 5, dans lequel le porte-aimant
(3) est précontraint par rapport à l'axe longitudinal (L) dans le sens axial par le biais d'un élément (1b) élastique comme un ressort qui est de préférence agencé dans le guidage (1a) entre l'extrémité tournée vers le guidage (1a) de la section d'aimant (3a) et une extrémité opposée à cette extrémité du guidage (1a).

7. Système de mesure de course électromagnétique selon l'une quelconque des revendications précédentes, dans lequel le coulisseau (5) présente un axe médian (5b) qui s'étend le long de l'axe longitudinal (L), et dans lequel une surface de capteur tournée vers le boîtier (1) de l'élément de capteur (2) est agencée parallèlement à un plan de capteur (2a) s'étendant parallèlement à l'axe médian (5a) et le guidage (1a) est agencé à l'opposé de la surface de capteur, dans lequel l'élément de capteur (2) est agencé en dehors d'un plan défini par une brasure (5c) de l'axe médian (5b) sur le plan de capteur (2a) et l'axe médian (5b).

8. Système de mesure de course électromagnétique selon l'une quelconque des revendications précédentes, dans lequel le coulisseau (5) est guidé dans un guidage de coulisseau (6) en direction de l'axe longitudinal (L).

9. Système de mesure de course électromagnétique selon l'une quelconque des revendications précédentes, dans lequel le coulisseau (5) est précontraint par rapport à l'axe longitudinal (L) dans le sens axial par le biais d'un élément (9) élastique comme un ressort, de préférence en direction du guidage de coulisseau (6).

10. Porte-aimant (3) avec un aimant (4) pour un système de mesure de course électromagnétique selon l'une quelconque des revendications 1 à 9, dans lequel la section de retenue (3b) du porte-aimant (3) est formée comme bras en saillie et la section d'aimant (3a) du porte-aimant (3) s'étend dans un angle, en particulier sensiblement perpendiculairement, au bras en saillie.

11. Porte-aimant (3) selon la revendication 10, dans lequel la section de retenue (3b) présente à une extrémité libre deux bras de retenue (3c) s'étendant dans un plan de la section de retenue (3b), duquel la section d'aimant (3a) s'étend, respectivement latéralement des deux côtés de la section de retenue (3b) vers l'extérieur, pliés en particulier dans le sens d'étendue et tournés loin de la section d'aimant (3a).

12. Porte-aimant (3) selon la revendication 11, dans lequel des surfaces des bras de retenue (3c) qui s'étendent sensiblement parallèlement au plan de la section de retenue (3b), duquel s'étend la section d'aimant (3a), sont formées au moins par sections de manière bombée.

13. Utilisation d'un système de mesure de course électromagnétique selon l'une quelconque des revendications 1 à 9 pour un module de pédale de frein.
